# EUROPEAN PATENT APPLICATION

(11) **EP 4 830 970 A1**
(43) Date of publication of application: **28.10.2026**
(21) Application number: 25902832.2
(22) Date of filing: 12.08.2025
(51) Int. Cl.: B60K 35/28, B60R 16/023, B60K 35/10

(54) **INTELLIGENT COCKPIT SYSTEM FOR PARENT-CHILD ENTERTAINMENT AND CONTROL METHOD THEREFOR**

(30) Priority: 12.12.2024 CN 202411831341
(71) Applicant: Chery Automobile Co., Ltd., Wuhu, Anhui 241006 (CN)
(72) Inventor: ZHANG, Bibo, Wuhu, Anhui 241006 (CN); TU, Jingang, Wuhu, Anhui 241006 (CN); WU, Jun, Wuhu, Anhui 241006 (CN)
(74) Representative: Adamson Jones
(86) International application number: PCT/CN2025/114101
(87) International publication number: WO 2026/123745

(57) **Abstract**

An intelligent cockpit system for parent-child entertainment and a control method therefor. An HMI system can implement a baby entertainment mode switch, a baby entertainment mode setting item and a baby entertainment mode pop-up window prompt. A multimedia system can adjust the volume, audio zones, and audio zone usage. A baby entertainment mode APP can be used for controlling to enter and exit a baby entertainment mode.

## Description

This application claims priority to a Chinese patent application with application number 202411831341.3, filed on December 12, 2024, entitled "INTELLIGENT COCKPIT SYSTEM FOR PARENT-CHILD ENTERTAINMENT and CONTROL METHOD THEREFOR," the contents of which are herein incorporated by reference in its entirety.

### TECHNICAL FIELD

Embodiments of the present disclosure belong to the field of vehicle-related technologies, and particularly relate to an intelligent cockpit system for parent-child entertainment and a control method therefor.

### BACKGROUND

Currently, the sales proportion of new energy vehicles in the market is increasing. The popularization of new energy vehicles has also led to a higher degree of digitalization, intelligence, and connectivity in automobiles. More families choose self-driving and travel together as a family when traveling. Children, as a special group, cannot play or engage in games freely in the car as they do at home or outdoors. Since children have weaker control abilities than adults, a more intelligent entertainment cockpit system needs to be provided for children and also meets the driver's needs for vehicle navigation at the same time. Currently, due to significant differences in the configurations of various vehicle models, a universal intelligent cockpit system for parent-child entertainment and a function control method thereof are needed to meet the demands of different vehicle models for parent-child entertainment.

### SUMMARY

To overcome the deficiencies of the existing technology mentioned above, the embodiments of the present disclosure provide an intelligent cockpit system for parent-child entertainment and a control method therefor. The proposed intelligent cockpit system can accommodate different hardware configurations and various signal sources, thereby realizing control, playback, and display for vehicle models with different configurations, and can provide rich entertainment programs for children while ensuring safe driving, thereby meeting diverse vehicle usage requirements.

To achieve the above objectives, the embodiments of the present disclosure adopt the following technical solutions:

Firstly, the embodiments of the present disclosure provide an intelligent cockpit system for parent-child entertainment, including:
a human-machine interface (HMI) system, configured to respond to a user's operation request for activating the kids entertainment mode, provide a selection interface for kids entertainment mode after the kids entertainment mode is activated, and broadcast relevant information via voice;
a kids entertainment mode application APP, configured to receive a request signal for activating the kids entertainment mode from the HMI system, activate the kids entertainment mode in response to a vehicle meeting an activation condition for the kids entertainment mode, and feed back a signal indicating that the kids entertainment mode has been activated to the HMI system; and
a multimedia system, configured to perform playback in the kids entertainment mode after the kids entertainment mode is activated, and restore playback effect based on volume, audio zones, and usage status of the audio zones recorded before the kids entertainment mode is activated after the kids entertainment mode is closed.

Secondly, the embodiments of the present disclosure provide a control method for an intelligent cockpit system for parent-child entertainment, including:
receiving, by a HMI system, a user's operation request for activating a kids entertainment mode and sending a request signal for activating the kids entertainment mode to a kids entertainment mode APP;
activating, by the kids entertainment mode APP, the kids entertainment mode in response to a vehicle meeting an activation condition for the kids entertainment mode upon receiving the request signal for activating the kids entertainment mode, and feeding back a signal indicating that the kids entertainment mode has been activated to the HMI system;
performing, by a multimedia system, playback in the kids entertainment mode in response to the HMI system is activated, and restoring playback effect based on volume, audio zones, and usage status of the audio zone recorded before the kids entertainment mode is activated after the kids entertainment mode is closed.

Thirdly, the embodiments of the present disclosure provide an electronic device including a memory, a processor, and computer instructions stored on the memory and executed on the processor, wherein when the computer instructions are executed by the processor, the method described in the first aspect is completed.

In the fourth aspect, the embodiments of the present disclosure provide a computer-readable storage medium for storing computer instructions, wherein when the computer instructions are executed by a processor, the method described in the first aspect is completed.

In the fifth aspect, the embodiments of the present disclosure provide a computer program product, including a computer program, wherein the computer program, when executed by a processor, implements the method described in the first aspect.

The one or more technical solutions above have the following beneficial effects.

The embodiments of the present disclosure provide an intelligent cockpit system for parent-child entertainment. An HMI system can implement a kids entertainment mode switch, a kids entertainment mode setting item, a kids entertainment mode pop-up prompts. The multimedia system allows adjustment of volume, audio zones, and audio zone usage. The kids entertainment mode APP can control entry into and exit from the kids entertainment mode. Vehicle models with different configurations generally include the HMI system, the kids entertainment mode APP, a multimedia, a window system, a low-voltage power supply system, and a power system. The intelligent cockpit system in the embodiments of the present disclosure achieve the needs of parent-child entertainment through the response among various components, and also accommodate different hardware configuration differences and various signal sources, thereby achieving the purpose of control, playback, and display for vehicle models with different configurations. In this process, children can be provided with a rich variety of audio and video entertainment programs such as children's songs, cartoons, history, stories, and science popularization, and entertainment programs are also provided while ensuring safe driving, thereby fulfilling diverse vehicle usage requirements At the same time, in this process, the investment and experimental verification required for software differentiation development across different vehicle models and configurations is reduced, and one-time development and verification to be applied to multiple vehicle models is realized.

The advantages of the additional aspects of the embodiments of the present disclosure are partially presented in the following description, and some become apparent from the following description, or can be understood through practice of the embodiments of the present disclosure.

### BRIEF DESCRIPTION OF THE DRAWINGS

The drawings attached to the specification, which form part of the embodiments of the present disclosure, are used to provide further understanding of the embodiments. The schematic embodiments and descriptions thereof are used to explain the embodiments of the present disclosure and do not constitute undue limitations on the embodiments.
FIG.1 is a schematic diagram of an overall implementation process of an intelligent cockpit system for parent-child entertainment according to some embodiments of the present disclosure;
FIG. 2 is a schematic diagram of an implementation process of a function for failed activation for a kids entertainment mode according to some embodiments of the present disclosure;
FIG. 3 is a schematic diagram of an implementation process of a function for exiting a kids entertainment mode via voice or keys according to some embodiments of the present disclosure;
FIG. 4 is a schematic diagram of an implementation process of a function for exiting a kids entertainment mode upon a vehicle power-off function according to some embodiments of the present disclosure;
FIG. 5 is a schematic diagram of an implementation process of a function for setting a kids entertainment mode according to some embodiments of the present disclosure; and
FIG. 6 is an overall block diagram of an intelligent cockpit system for parent-child entertainment according to some embodiments of the present disclosure.

### DETAILED DESCRIPTION

It should be noted that the following detailed descriptions are exemplary and intended to provide further explanation of the embodiments of the present disclosure. Unless otherwise indicated, all technical and scientific terms used herein have the same meaning as commonly understood by those skilled in the art to which the embodiments of the present disclosure belong.

It should be noted that the terms used herein are merely for the purpose of describing specific embodiments and are not intended to limit the exemplary embodiments according to the embodiments of the present disclosure.

The embodiments and features within the embodiments of the present disclosure may be combined with each other without conflict.

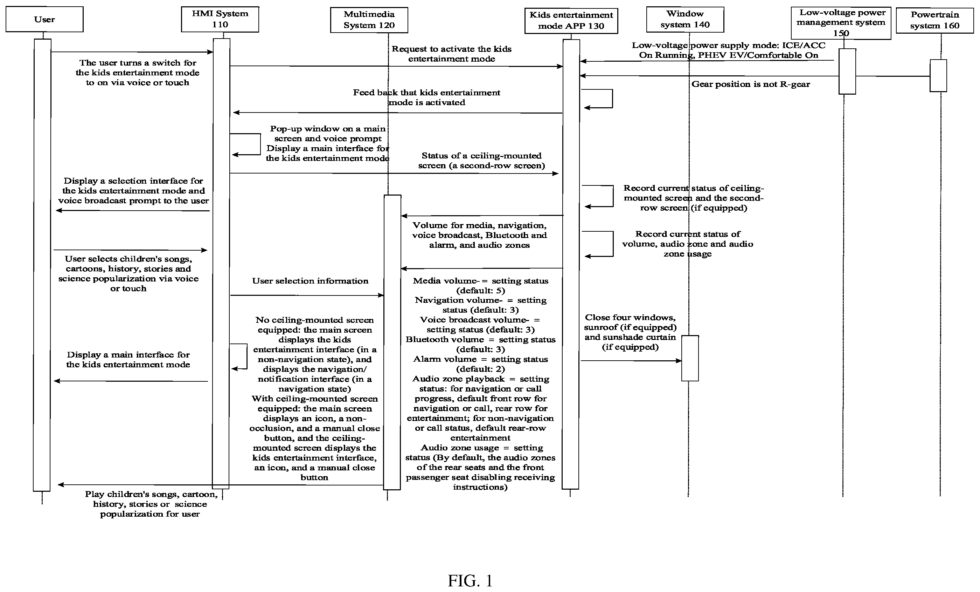

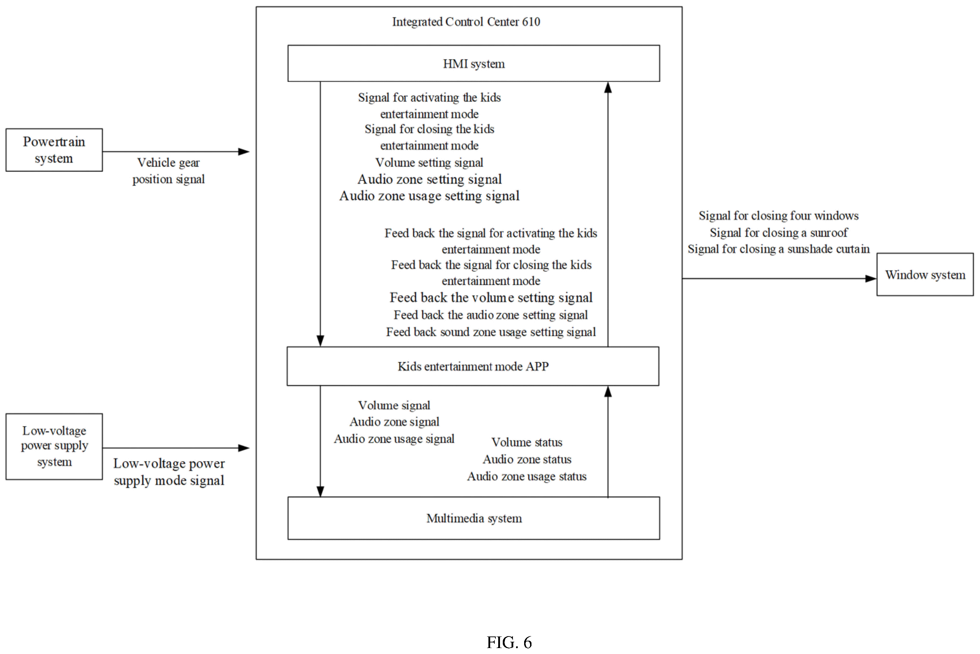

FIG. 1 is a schematic diagram of an overall implementation process of an intelligent cockpit system for parent-child entertainment according to some embodiments of the present disclosure, and FIG. 6 is an overall block diagram of an intelligent cockpit system for parent-child entertainment according to some embodiments of the present disclosure. As shown in FIG. 1, the execution subject includes a user, an HMI system 110, a multimedia system 120, a kids entertainment mode APP 130, a window system 140, a low-voltage power management system 150, and a power system 160.

A human-machine interface (HMI) system is configured to respond to a user's operation request for activating the kids entertainment mode, provide a selection interface for the kids entertainment mode after the kids entertainment mode is activated and broadcast relevant information via voice.

Illustratively, the human-machine interface system includes the kids entertainment mode. When the user selects to activate the kids entertainment mode, the system responds to the operation request and enters the kids entertainment mode. Upon entering this mode, the system displays an interface for the user to select different entertainment content. At the same time, the system also broadcasts relevant information to the user through voice such as introductions to entertainment content or operation prompts, to enhance the user experience. The purpose of this design is to enable the user to more easily make choices in the entertainment mode and help the user understand the current functions or operations through voice.

A kids entertainment mode application (APP) is configured to receive the request signal for activating the kids entertainment mode from the HMI system. When the vehicle meets the conditions to activate the kids entertainment mode, the kids entertainment mode activates the kids entertainment mode and feeds back a signal indicating that the kids entertainment mode has been activated to the HMI system.

Illustratively, the kids entertainment mode is implemented as an application that receives a request signal from the human-machine interface (HMI) system. Upon receiving the request, the application first determines whether the vehicle meets the conditions to activate the kids entertainment mode, such as analyzing factors like the interior environment and vehicle status. In the case that the vehicle satisfies the conditions to activate the kids entertainment mode (pre-defined conditions), the application activates the kids entertainment mode and notifies the HMI system through a feedback signal, indicating that the kids entertainment mode has been successfully activated. In this way, the application and the HMI system interact through a signal to ensure that the kids entertainment mode is activated under appropriate conditions and can provide corresponding entertainment functions to the user.

A multimedia system is configured to perform playback in the kids entertainment mode after the kids entertainment mode is activated, and restore the playback effect based on information of volume, audio zones, and usage status of the audio zone before the kids entertainment mode is activated after the kids entertainment mode is closed.

Illustratively, when the kids entertainment mode is activated, the multimedia system responds and plays the content selected by the user according to the instructions of the HMI system, thereby ensuring the smooth operation of the kids entertainment mode. When the kids entertainment mode is closed, the multimedia system restores the playback effect based on information recorded by the kids entertainment mode APP before the kids entertainment mode is activated. The information includes volume, audio zones, and the usage status of the audio zone. Through the restoration of the settings, the multimedia system can maintain the user's previous playback experience, such that the user can continue to enjoy the original sound effects and playback effects after switching modes, thereby enhancing the overall experience.

As an implementable embodiment, the HMI system is configured to respond to an operation request signal from the user for closing the kids entertainment mode during the operation of the kids entertainment mode, send a request signal for closing the kids entertainment mode to the kids entertainment mode APP, and receive a closing feedback signal from the kids entertainment mode APP.

Illustratively, during the operation of the kids entertainment mode, the user can close the kids entertainment mode via the request signal. The HMI system responds to the signal and sends a closing request signal to the kids entertainment mode APP, informing the APP that the user wishes to close the kids entertainment mode. Upon receiving the request, the kids entertainment mode APP processes the request and sends the closing signal back to the HMI system, indicating that the kids entertainment mode has been successfully closed. Through the signal interaction, the HMI system and the kids entertainment mode APP can work in coordination, thereby ensuring that the user can close the kids entertainment mode at any time, and the system can also timely feed back the operation result.

The above content introduces that when the user wish to close the kids entertainment mode, the HMI system can respond promptly and send the closing request to the kids entertainment mode APP to ensure smooth operation. Through the closing signal fed back by the kids entertainment mode APP, the HMI system can confirm that the kids entertainment mode has been successfully closed, thereby preventing the user from operating unclear or mistakenly. The process provides more efficient control and feedback, facilitates the user to manage the kids entertainment mode more easily, enhance the reliability and convenience of the system and also provides a smoother user experience and system control.

As an implementable embodiment, the kids entertainment mode APP is configured to exit the kids entertainment mode in response to receiving a request signal for closing the kids entertainment mode sent by the HMI system or a signal for closing the low-voltage power supply mode sent by the low-voltage power supply system during the operation of the kids entertainment mode.

When the kids entertainment mode APP receives a request signal from the HMI system for closing the kids entertainment mode, the kids entertainment mode APP responds to the request and exit the kids entertainment mode. Secondly, when the low-voltage power supply system sends a signal indicating that the power mode has been changed to OFF, the kids entertainment mode APP also automatically exits the kids entertainment mode. Through the mechanism, the kids entertainment mode APP can automatically or promptly exit the entertainment mode according to the user's operations in different situations, thereby avoiding abnormal or unstable system caused by power supply problems or user demands, and thus ensuring the safe and stable operation of the vehicle.

The aforementioned process not only prevents instability issues arising from power supply problems or user operational errors, but also protects the battery and power system, thereby enhancing overall safety and user experience. Furthermore, the system's intelligent response simplifies operations, thereby reducing the operational burden on the user.

As an implementable embodiment, the kids entertainment mode APP is configured to receive a powertrain gear position signal. When the powertrain gear position signal is not the reverse R gear, the kids entertainment mode APP responds to a request signal for activating the kids entertainment mode sent by the HMI system to activate the kids entertainment mode, and feeds back to the HMI system a signal indicating that the kids entertainment mode has been activated.

When the powertrain system is in a non-reverse gear (i.e., not in the R gear), the kids entertainment mode APP activates the kids entertainment mode according to the request signal sent by the HMI system. That is, the kids entertainment mode is only activated when the vehicle is in a forward or parked state, thereby avoiding interference from the kids entertainment mode affecting driving safety during reversing. After the kids entertainment mode is activated, the kids entertainment mode APP send a confirmation signal to the HMI system to feed back that the kids entertainment mode has been successfully activated.

Through the design, it can ensure to a certain extent that the kids entertainment mode only operates in a safe driving environment, thereby enhancing the system's safety and user experience while avoiding potential risks during driving. It allows the user to clearly understand the working status of the kids entertainment mode, thereby improving the system's reliability and operational convenience.

As an implementable embodiment, the kids entertainment mode APP is also configured to receive setting signals for media, navigation, voice broadcast, Bluetooth, and alarm sent by the HMI system, save and feed back the volume settings, and receive the setting signals for audio zones and audio zone usage sent by the HMI system, save and feed back the settings of audio zones and audio zone usage.

The kids entertainment mode APP can receive a plurality of signals from the HMI system, including setting signals for media volume, navigation volume, voice broadcast volume, Bluetooth volume, and alarm volume. By saving the volume settings and feeding back the setting results to the HMI system, it ensures that volume adjustments take effect in the kids entertainment mode and are consistent with the system. In addition, the kids entertainment mode APP can also receive the setting signals for audio zones and audio zone usage, save the settings and preferences of audio zone and audio zone usage, and feed back the setting results to the HMI system.

The above process enables the user to customize the audio experience according to personal needs, while ensuring that the sound settings of the system are synchronized with actual operation, thereby enhancing user comfort and entertainment experience. It also meet the user's preferences for sound distribution, and the feedback mechanism of the kids entertainment mode APP ensures that the user can clearly understand the setting status, thereby enhancing the smoothness of the operation and the overall user experience.

As an implementable embodiment, when the vehicle is not equipped with a ceiling-mounted screen and is in non-navigation state, the HMI system is configured to display the kids entertainment interface on the main screen. In the case that the vehicle is not equipped with a ceiling-mounted screen and is in navigation state, the HMI system is configured to display the navigation or call interface on the main screen. In the case that the vehicle is equipped with a ceiling-mounted screen, the HMI system is configured to display the kids entertainment interface on the ceiling-mounted screen.

When the vehicle is not equipped with a ceiling-mounted screen and is in a non-navigation state, the HMI system displays the kids entertainment interface on the main screen. If the vehicle is in a navigation state, the HMI system displays the navigation or call interface on the main screen. The operation optimizes the relevance and practicality of the displayed content, thereby ensuring that the user can clearly see the necessary information and avoid interfering with driving. At the same time, when the vehicle is equipped with a ceiling-mounted screen, the HMI system displays the kids entertainment interface on the ceiling-mounted screen for rear passengers. The design takes into account the display needs under different devices and states, enhances the user experience inside the vehicle and ensures a balance between the entertainment needs of front and rear passengers and driving safety.

The above content introduces the process of adjusting display content based on vehicle configuration and status. When no ceiling-mounted screen is equipped, the main screen displays the kids entertainment interface or navigation/call interface, which can be reasonably switched according to current demands. When a ceiling-mounted screen is equipped, the kids entertainment interface is specifically displayed on the ceiling-mounted screen to meet the entertainment needs of rear passengers while avoiding interference with the line of sight of the driver. The design optimizes the allocation of in-vehicle resources and enhances the comfort and convenience of driving and riding.

As an implementable embodiment, the HMI system is configured to provide the user with setting items for the kids entertainment mode, including settings for audio zone playback, audio zone usage, media volume, navigation volume, voice broadcast volume, Bluetooth volume, and alarm volume.

The HMI system allows the user to adjust multiple audio and playback settings, thereby ensuring that the kids entertainment mode provides the best audio experience. The setting items include the setting of the audio zone playback, where the user can choose different audio zones for audio output. The setting of the audio zone usage determine which zones can enable audio playback. The settings for media volume, navigation volume, voice broadcast volume, Bluetooth volume, and alarm volume adjust the volume of different functions to meet the user's needs in different situations.

The aforementioned extensive settings enable the user to adjust the volume and audio zone according to actual situations, thereby ensuring clear and comfortable sound effects and information playback in the kids entertainment mode, while avoiding any distractions to the driver. This process offers enhanced personalization and convenience, thereby improving the in-vehicle entertainment and user experience.

The intelligent cockpit system for parent-child entertainment according to the embodiments can accommodate multiple power architectures currently available in the market, including internal combustion engine (ICE) vehicles, plug-in hybrid electric vehicles (PHEV), range-extended electric vehicles (REEV), and battery electric vehicles (BEV). The system can also accommodate different hardware configurations and various signal sources, enabling control, playback, and display for vehicles with different configurations. The system provides children with a rich array of audio and video entertainment programs, such as children's songs, cartoons, history, stories, and science popularization. It can also differentiate between different audio zones to play different content, satisfying both the driver's needs for navigation prompts and the children's needs for video and audio playback. The system ensures safe driving while providing entertainment programs, thereby fulfilling diverse vehicle usage requirements. Additionally, the system reduces the investment and testing verification required for software differentiation development across different vehicle models and configurations, enabling one-time development and verification while supporting multiple vehicle models.

The following provides a detailed description of the intelligent cockpit system for parent-child entertainment proposed in the embodiments, specifically:
In the embodiments, the HMI system is configured to provide a switch for the kids entertainment mode, setting items for the kids entertainment mode, and pop-up prompts for the kids entertainment mode.

In some embodiments, the HMI system includes: a first power supply ICE: ACC On Running, PHEV/EV: Comfortable On. The user can activate the kids entertainment mode through touch switches or voice commands.

The HMI system also includes a second power supply ICE: ACC On Running, PHEV/EV: Comfortable On. The HMI system receives a signal from the kids entertainment mode APP indicating that the mode has been activated. A pop-up window appears and voice broadcast is played: "Little one, the entertainment mode is activated. The windows and sunroof will be closed. Please be safe." The HMI system adjusts the status of the ceiling-mounted screen and the second-row screen (if equipped). The selection interface for the kids entertainment mode is displayed.

The HMI system also includes a third power supply ICE: ACC On Running, PHEV/EV: Comfortable On. The HMI system receives a signal from the kids entertainment mode APP indicating that the kids entertainment mode cannot be activated by the R gear. A voice prompt is played on the central control screen: "In reverse, the kids entertainment mode cannot be activated."

The HMI system also includes a fourth power supply ICE: ACC On Running, PHEV/EV: Comfortable On. The user can select children's songs, cartoons, history, stories, and science popularization through touch switches or voice commands.

The HMI system also includes a fifth power supply ICE: ACC On Running, PHEV/EV: Comfortable On. The HMI system sends user selection information. In the case that no ceiling-mounted screen is equipped, in non-navigation state, the main screen displays the kids entertainment interface, and in navigation state, the main screen displays the navigation or call interface. In the case that a ceiling-mounted screen is equipped, the main screen interface displays icons and a manual close button, while the ceiling-mounted screen displays the kids entertainment interface, icons and a manual close button.

The HMI system also includes a sixth power supply ICE: ACC On Running, PHEV/EV: Comfortable On, the kids entertainment mode in operation.

In the case that the user closes the kids entertainment mode via a touch switch, the HMI system sends a request signal for closing the kids entertainment mode, receives a feedback signal for closing the kids entertainment mode sent by the kids entertainment mode APP, and displays the off status of the switch for the kids entertainment mode. The HMI system receives the status of the ceiling-mounted screen before the kids entertainment mode is activated sent by the kids entertainment mode APP, and adjusts the ceiling-mounted screen and the second-row screen (if equipped).

In the case that the user closes the kids entertainment mode through the voice command, the HMI system sends a request signal for closing the kids entertainment mode to the kids entertainment mode APP, and plays a voice announcement "Okay, the kids entertainment mode has been closed". Afterwards, the HMI system receives the feedback signal for closing the kids entertainment mode sent by the kids entertainment mode APP, and displays the off status of the switch for the kids entertainment mode. The HMI system receives the status of the ceiling-mounted screen before the kids entertainment mode is activated sent by the kids entertainment mode APP, and adjusts the ceiling-mounted screen and the second-row screen (if equipped).

The HMI system also includes a seventh power supply ICE: ACC On Running, PHEV/EV: Comfortable On. The HMI system provides setting items for the kids entertainment mode:
The setting of audio zone playback (in navigation or call status, the default is front seats for navigation or call receiving and rear seats for entertainment or in neither navigation nor call status, the default is rear seats for entertainment).

The setting of audio zone usage (by default: the audio zones of the rear seats and the front passenger seat disabling receiving instructions).

The settings of media volume (default: 5), navigation volume (default: 3), voice broadcast volume (default: 3), Bluetooth volume (default: 3), and alarm volume (default: 2).

In the embodiments, the multimedia system is configured to adjust volume, audio zones, and audio zone usage.

In some embodiments, the multimedia system includes: a first power supply ICE: ACC On Running, PHEV/EV: Comfortable On. In the case that the kids entertainment mode APP determines that the conditions for enabling the kids entertainment mode are met, the multimedia system receives information about the volume, audio zones, and audio zone usage status of media, navigation, voice broadcast, Bluetooth, and alarms sent by the kids entertainment mode APP, and then adjusts the volume and audio zones accordingly.

The multimedia system also includes a second power supply ICE: ACC On Running, PHEV/EV: Comfortable On. The multimedia system receives the selection signal sent by the HMI system and plays children's songs, cartoons, history, stories, and science popularization.

The multimedia system also includes a third power supply ICE: ACC On Running, PHEV/EV: Comfortable On, the kids entertainment mode in operation.

The user closes the kids entertainment mode through touch or voice control. The multimedia system receives the volume, audio zones, and audio zone usage status of media, navigation, voice broadcast, Bluetooth, and alarms before the kids entertainment mode is activated, sent by the kids entertainment mode APP, and adjusts the volume and sound range.

In the embodiments, the kids entertainment mode APP controls the entry and exit of the kids entertainment mode.

In some embodiments, the kids entertainment mode APP includes: a first power supply ICE: ACC On Running, PHEV/EV: Comfortable On. The kids entertainment mode APP receives a request signal for activating the kids entertainment mode sent by the HMI system, receives the power system gear signal, and determines whether the gear is not in R gear: the gear is not in R gear, the kids entertainment mode APP activates the kids entertainment mode, feeds back to the HMI system that the kids entertainment mode has been activated, records the status including media volume, navigation volume, voice broadcast volume, Bluetooth volume, alarm volume, audio zones, audio zone usage, and ceiling-mounted screen (if equipped) before the kids entertainment mode is activated, sends a signal for closing all four windows to the window system, sends a signal for closing the sunroof, sends a signal for closing the sunshade, and sends volume signals, audio zone playback signals, and audio zone usage signals to the multimedia system. The gear is in R gear, the kids entertainment mode APP does not activate the kids entertainment mode and feeds back to the HMI system that the kids entertainment mode cannot be activated.

The kids entertainment mode APP includes a second power source ICE: ACC On Running, PHEV/EV: Comfortable On, the kids entertainment mode in operation. The kids entertainment mode APP receives a request signal for closing the kids entertainment mode sent by the HMI system or a signal indicating that the low-voltage power supply mode sent by the low-voltage power supply system has changed to off, exits the kids entertainment mode and feeds back a closing status signal. The entertainment mode APP sends the volume, audio zones, and audio zone usage status of media, navigation, voice broadcast, Bluetooth, and alarms before the kids entertainment mode is activated to the multimedia system, and records the current volume, audio zones, and audio zone usage status, and receives the status of the ceiling-mounted screen and the second-row screen (if equipped) sent by the HMI system before the kids entertainment mode is activated and records the current status of the ceiling-mounted screen and the second-row screen (if equipped).

The kids entertainment mode APP includes a third power supply ICE: ACC On Running, PHEV/EV: Comfortable On. The kids entertainment mode APP receives volume setting signals for media, navigation, voice broadcast, Bluetooth, and alarm sent by the HMI system, saves and feeds back the volume settings. The kids entertainment mode APP receives setting signals for audio zones and audio zone usage sent by the HMI system, saves and feeds back the settings of audio zones and audio zone usage.

When the vehicle is powered off, the kids entertainment mode is closed. After the vehicle is powered on again, the switch for the kids entertainment mode displays off status, and the setting items of the kids entertainment mode revert to the settings previously saved.

In the embodiments, the low-voltage power supply system is configured to receive power supply status commands to switch power mode, and provide power status information in real time.

In some embodiments, the low-voltage power supply system includes: the power supply ICE: OF ACC On Running, PHEV/EV (Plug-in Hybrid Electric Vehicle/Electric Vehicle): OF Comfortable On, providing power status information in real time, and controlling power mode switching according to the request information.

In the embodiments, the window system is configured to control the closing of four windows, a sunroof, and a sunshade.

In the embodiments, the powertrain system is configured to provide vehicle gear information in real time.

The embodiments provide a control method for an intelligent cockpit system for parent-child entertainment, includes the following:
The HMI system receives the user's request to activate the kids entertainment mode and sends a request signal for activating the kids entertainment mode to the kids entertainment mode APP.

The kids entertainment mode APP determines whether the vehicle meets the conditions to activate the kids entertainment mode based on the received request signal for activating the kids entertainment mode. In the case that the vehicle meets the conditions, the kids entertainment mode APP activates the kids entertainment mode and feeds back to the HMI system that the kids entertainment mode has been activated.

After the kids entertainment mode is activated, the multimedia system plays back in response to the selected kids entertainment mode sent by the HMI system. After the kids entertainment mode is closed, the multimedia system restores the status of the volume, audio zones, and audio zone usage sent by the kids entertainment mode APP before the kids entertainment mode is activated.

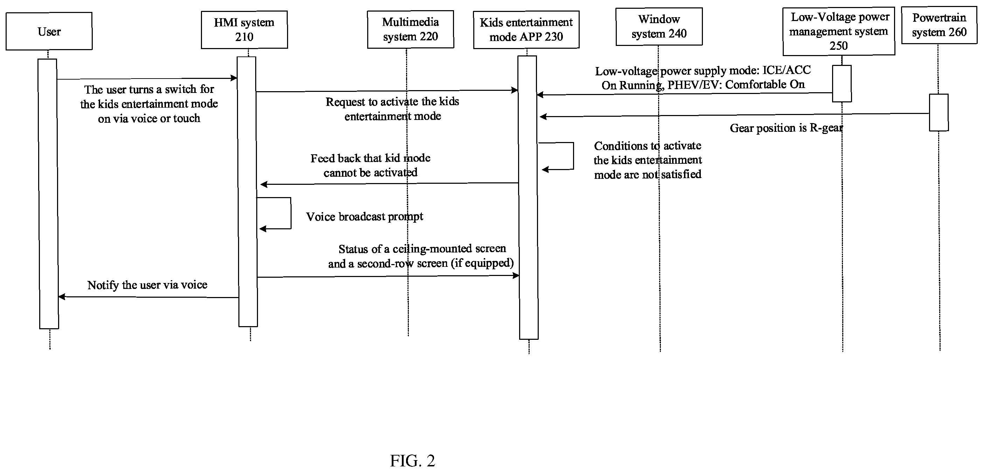

FIG. 2 provides a flowchart of the failure to activate the kids entertainment mode. The execution entities include a user, an HMI system 210, a multimedia system 220, a kids entertainment mode APP 230, a window system 240, a low-voltage power management system 250, and a power system 260.

When the HIM system responds to a user's voice command or touch to turn the switch for the kids entertainment mode to on, the HIM system sends a request signal for activating the kids entertainment mode to the kids entertainment mode APP.

After receiving the request signal for activating the kids entertainment mode, the kids entertainment mode APP receives a signal indicating that the gear position is in R gear from the power system, and the low-voltage power supply mode fed back by the low-voltage power supply management system is ICE: ACC On Running, PHEV/EV: Comfortable On. The kids entertainment mode APP determines, according to the received power system and the feedback signal from the low-voltage power management system, that the conditions to activate the kids entertainment mode are not met, and feeds back to the HIM system that the kids entertainment mode cannot be activated.

After receiving the feedback signal indicating that the kids entertainment mode cannot be activated, the HIM system notifies the user via voice broadcast.

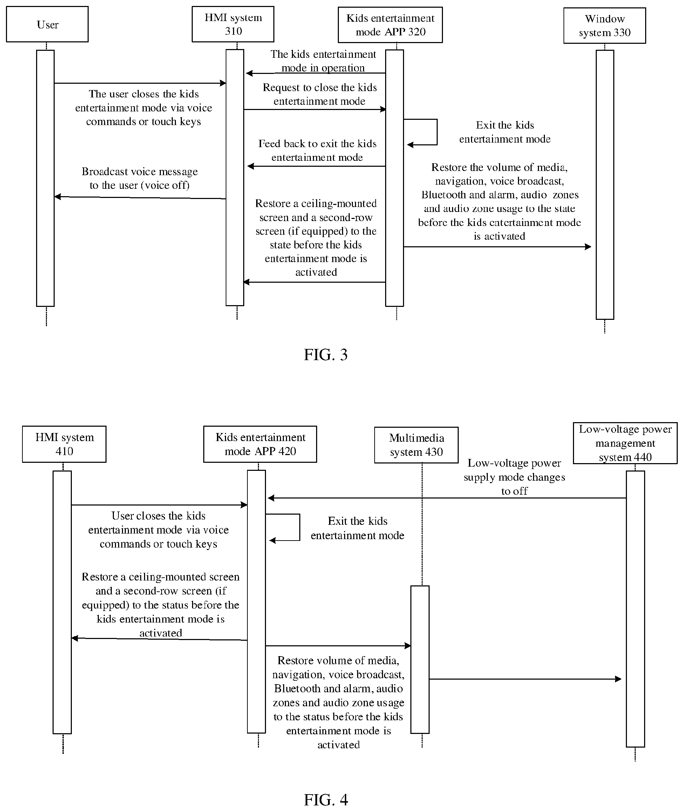

FIG. 3 provides a flowchart for exiting the kids entertainment mode through voice or keys. The execution entities include a user, an HMI system 310, a kids entertainment mode APP 320, and a window system 330.

During the operation of the kids entertainment mode, the HIM system responds to the user voice or touch keys to close the kids entertainment mode and sends a mode for closing the kids entertainment mode APP.

The kids entertainment mode APP responds to the mode for closing the kids entertainment mode sent by the HIM system, exits the kids entertainment mode, and feeds back the exit status to the HIM system.

The HIM system responds to the feedback from the kids entertainment mode APP to exit the kids entertainment mode, and plays voice information to the user.

After exiting the kids entertainment mode, the multimedia system restores media, navigation, voice broadcast, Bluetooth, alarm volume, audio zones, and audio zone usage to the state before the kids entertainment mode is activated.

After exiting the kids entertainment mode, in the case that the vehicle is equipped with a second-row screen, the HIM system restores the ceiling-mounted screen to the state before the kids entertainment mode is activated.

FIG. 4 provides a flowchart for exiting the kids entertainment mode upon a vehicle power off. The execution entities include a HMI system 410, a kids entertainment mode APP 420, a multimedia system 430, and a low-voltage power management system 440.

The low-voltage power management system sends a signal to the kids entertainment mode APP indicating that the low-voltage power supply mode has been switched to off.

The kids entertainment mode APP responds to the signal sent by the low-voltage power management system indicating that the low-voltage power supply mode has been changed to off, and exits the kids entertainment mode.

After exiting the kids entertainment mode, the multimedia system restores media, navigation, voice broadcast, Bluetooth, alarm volume, audio zones, and audio zone usage to the state before the kids entertainment mode is activated.

After exiting the kids entertainment mode, in the case that the vehicle is equipped with a second-row screen, the HIM system restores the ceiling-mounted screen to the state before the kids entertainment mode is activated.

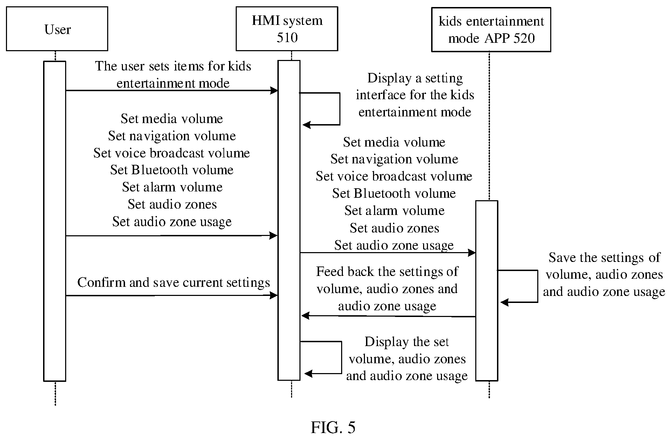

FIG. 5 provides a flowchart of the implementation of setting the kids entertainment mode. The execution entities including a user, a HMI system 510, and a kids entertainment mode APP 520.

The user can set items for the kids entertainment mode through the HIM system, including settings for media speakers, navigation volume, voice broadcast volume, Bluetooth volume, alarm volume, audio zones, and audio zone usage, and save the current settings.

The HIM system provides a setting interface of the kids entertainment mode for the user, and sends the settings of media volume, voice broadcast volume, Bluetooth volume, alarm volume, audio zones, and audio zone usage to the kids entertainment mode APP.

The kids entertainment mode APP stores the settings of the volume, audio zones, and audio zone usage sent by the HIM system, and feeds back the settings to the HIM system.

The HIM system displays the set volume, audio zones, and audio zone usage.

As shown in FIG. 6, the integrated control center (ICC) 610 includes an HMI system, a kids entertainment APP, and a multimedia system. The power system sends a vehicle gear signal to the ICC 610 for analysis. In addition, the low-voltage power supply system can also send a low-voltage power supply mode signal to the ICC 610 for analysis. The ICC 610 controls the multimedia state through the HMI system, the kids entertainment APP, and the multimedia system, thereby controlling the window system through at least one of various signals such as a four-window closing signal, a sunroof closing signal, and a sunshade closing signal.

It should be noted that the method embodiments according to the present disclosure can be referenced with the corresponding device embodiments, which is not limited in the embodiments of the present disclosure. The order of steps in the method embodiments according to the present disclosure can be appropriately adjusted, and steps can also be added or deleted according to the situation. Any skilled person in the art can easily conceive of variations within the technical scope disclosed in the present disclosure, which should be covered by the protection scope of the present disclosure, and therefore is not further elaborated.

In the present disclosure, the term "at least one of A and B" merely describes the association relationship between the associated objects, indicating that there can be three types of relationships. For example, "at least one of A and B" can represent three scenarios: A exists alone, A and B exist simultaneously, and B exists alone. This analogy can be extended. In the embodiments of the present disclosure, terms such as "first", "second", and "third" are used for descriptive purposes only and should not be understood as indicating or implying relative importance. The term "at least one" refers to one or more, and the term "plurality" refers to two or more, unless otherwise explicitly defined. The term "comprising" mentioned throughout the specification and claims is an open-ended phrase, and therefore should be interpreted as "including but not limited to".

The above description is only optional embodiments of the present disclosure and is not intended to limit the present disclosure. Any modifications, equivalent substitutions, improvements, etc. made within the spirit and principles of the present disclosure shall be included within the scope of protection of the present disclosure.

## Claims

1. An intelligent cockpit system for parent-child entertainment, comprising:
a human-machine interface (HMI) system, configured to respond to a user's operation request for activating a kids entertainment mode, provide a selection interface for the kids entertainment mode after the kids entertainment mode is activated, and broadcast relevant information via voice;
a kids entertainment mode application (APP), configured to receive a request signal for activating the kids entertainment mode from the HMI system, activate the kids entertainment mode in response to a vehicle meeting an activation condition for the kids entertainment mode, and feed back a signal indicating that the kids entertainment mode has been activated to the HMI system; and
a multimedia system, configured to perform playback in the kids entertainment mode after the kids entertainment mode is activated, and restore playback effect based on volume, audio zones, and usage status of the audio zones recorded before the kids entertainment mode is activated after the kids entertainment mode is closed.

2. The intelligent cockpit system for parent-child entertainment according to claim 1, wherein the HMI system is configured to respond to a user's operation request signal for closing the kids entertainment mode during an operation of the kids entertainment mode; send a request signal for closing the kids entertainment mode to the kids entertainment mode APP, and receive a closing feedback signal from the kids entertainment mode APP.

3. The intelligent cockpit system for parent-child entertainment according to claim 1 or 2, wherein the kids entertainment mode APP is configured to exit the kids entertainment mode upon receiving the request signal for closing the kids entertainment mode from the HMI system or a low-voltage power mode off signal from a low-voltage power supply system during the operation of the kids entertainment mode.

4. The intelligent cockpit system for parent-child entertainment according to any one of claims 1 to 3, wherein the kids entertainment mode APP is configured to receive a powertrain gear position signal, activate the kids entertainment mode in response to the request signal for activating the kids entertainment mode from the HMI system based on the powertrain gear position signal being not in a reverse (R) gear, and feed back the signal indicating that the kids entertainment mode has been activated to the HMI system.

5. The intelligent cockpit system for parent-child entertainment according to any one of claims 1 to 4, wherein the kids entertainment mode APP is further configured to receive setting signals for media volume, navigation volume, voice broadcast volume, Bluetooth volume, and alarm volume from the HMI system, save and feed back volume settings; receive setting signals for the audio zones and the zone usage from the HMI system, save and feed back settings of the audio zones and the zone usage.

6. The intelligent cockpit system for parent-child entertainment according to any one of claims 1 to 5, wherein in a case that the vehicle is not equipped with a ceiling-mounted screen and is in a non-navigation state, the HMI system is configured to display a kids entertainment interface on a main screen; in a case that the vehicle is not equipped with the ceiling-mounted screen and is in a navigation state, the HMI system is configured to display a navigation or call interface on the main screen; and in a case that the vehicle is equipped with the ceiling-mounted screen, the HMI system is configured to display the kids entertainment interface on the ceiling-mounted screen.

7. The intelligent cockpit system for parent-child entertainment according to any one of claims 1 to 6, wherein the HMI system is configured to provide a user with setting items for the kids entertainment mode, wherein the setting items comprise an audio zone playback setting, an audio zone usage setting, a media volume setting, a navigation volume setting, a voice broadcast volume setting, a Bluetooth volume setting, and an alarm volume setting.

8. A control method for an intelligent cockpit system for parent-child entertainment, comprising:
receiving, by a HMI system, a user's operation request for activating a kids entertainment mode and sending a request signal for activating the kids entertainment mode to a kids entertainment mode APP;
activating, by a kids entertainment mode APP, the kids entertainment mode in response to a vehicle meeting an activation condition for the kids entertainment mode upon receiving the request signal for activating the kids entertainment mode, and feeding back a signal indicating that the kids entertainment mode has been activated to the HMI system; and
performing, by a multimedia system, playback in the kids entertainment mode in response to the HMI system after the kids entertainment mode is activated; and restoring playback effect based on volume, audio zones, and usage status of the audio zones recorded before the kids entertainment mode is activated after the kids entertainment mode is closed.

9. The control method for the intelligent cockpit system for parent-child entertainment according to claim 8, further comprising: feeding back, by the kids entertainment mode APP, a signal indicating that the kids entertainment mode cannot be activated to the HMI system upon receiving a signal indicating that a powertrain gear position is in a R gear.

10. The control method for the intelligent cockpit system for parent-child entertainment according to claim 8 or 9, further comprising: receiving, by the HMI system, a user's operation request for closing the kids entertainment mode and sending a request signal for closing the kids entertainment mode to the kids entertainment mode APP; and
exiting, by the kids entertainment mode APP, the kids entertainment mode in response to the request signal for closing the kids entertainment mode, and feeding back a signal indicating that the kids entertainment mode has been exited to the HMI system.
